# EUROPEAN PATENT SPECIFICATION

(11) **EP 1 048 444 B1**
(45) Date of publication and mention of the grant of the patent: **11.08.2004**
(21) Application number: 99500059.3
(22) Date of filing: 15.04.1999
(51) Int. Cl.: B29D 24/00, B29C 65/48, B60R 5/04

(54) **Construction unit for trays and similar items**
Baueinheit für Ablagen und ähnliche Teile
Unité de construction pour tablettes et articles similaires

(43) Date of publication of application: 02.11.2000
(73) Proprietor: GRUPO ANTOLIN-INGENIERIA, S.A., 09080 Burgos (ES)
(72) Inventor: Morales Gallo, Francisco, 09003 Burgos (ES); Quiles Diaz, Rafael, 08029 Barcelona (ES); Soto Losada, Pablo, 09007 Burgos (ES)
(74) Representative: Urteaga Simarro, José Antonio

(56) References cited:
- EP-A- 0 468 810
- EP-A- 0 514 616
- DE-B- 1 036 064
- GB-A- 551 733
- US-A- 2 715 598
- PATENT ABSTRACTS OF JAPAN vol. 010, no. 326 (M-532), 6 November 1986 (1986-11-06) & JP 61 132414 A (KASAI KOGYO CO LTD), 19 June 1986 (1986-06-19)
- PATENT ABSTRACTS OF JAPAN vol. 017, no. 316 (M-1430), 16 June 1993 (1993-06-16) & JP 05 032137 A (YAMAKAWA IND CO LTD), 9 February 1993 (1993-02-09)
- PATENT ABSTRACTS OF JAPAN vol. 1995, no. 08, 29 September 1995 (1995-09-29) & JP 07 117566 A (HAYASHI GIJUTSU KENKYUSHO:KK), 9 May 1995 (1995-05-09)
- PATENT ABSTRACTS OF JAPAN vol. 006, no. 050 (M-120), 3 April 1982 (1982-04-03) & JP 56 164819 A (AICHI KK), 18 December 1981 (1981-12-18)

## Description

This invention relates to a construction unit for trays or similar items, which can be applied, among other fields, to the automobile industry in order to produce rear trays for vehicles, for example, all without discarding several other uses, which will be described later.

In the usual known techniques, these trays are produced starting from a mat, which is subdivided into another two mats, between which a set of metal inserts are introduced, so that the units joined in this way can be moulded under pressure and heat. Following this, the casing is placed on a press and a coating is situated on the two sides of the tray by means of an adhesive process. Finally, any surplus material is cut away from the textile or the casing, and the tray is then packed.

The most frequent disadvantages of this kind of procedure in producing the type of trays described lie in the fact that as the two sides of the tray are equal and correspond to each other, as well as having the metal insert, they become to heavy, with limited rigidity and also limited performance as regards the desired acoustic attenuation of these units.

Also known through GB-A- 551,733 is a method of obtaining a structural material based on two leaves or sheets, each of which is moulded forming a number of open cavities in one of its surfaces. The two leaves are joined together by the edges of these cavities, using adhesive, so as to form sealed air cells, evenly distributed and with corresponding geometry.

This structural material does not anticipate covering of its exterior surfaces with moquette and, moreover, these two surfaces have identical exterior surfaces to each other.

The internal cells created by this technique are foreseen exclusively to receive air in their interior and do not contemplate the inclusion of auxiliary functional items.

The object of this invention is a procedure for producing trays that provides units totally free of metal inserts and with a considerably reduced weight.

Another object of the invention is a procedure for manufcturing trays that achieves a greater acoustic attenuation of these units, while preventing heat transmissions.

Another object of the invention is a procedure for manufacturing trays that carries out the dressing and the trimming of excess material in the same operation.

Another object of the invention is a tray that is provided with hollow internal areas or gaps that make the trays more rigid.

Another object of the invention is to provide rear trays for automobiles that are substantially lighter than conventional ones and that enable different auxiliary items, such as loudspeakers, sunblinds, etc. to the fitted.

In order to implement these objectives, the invention claims a procedure that starts with two mats, which in turn can be subdivided into several. Each of these two mats is moulded independently of the other, so that one of the mats takes the shape of the upper part of the tray, whereas the other mat takes the lower shape of the tray, so that in these two moulding operations, where the necessary rigidity is obtained, the casingsare also cut to the measurements desired.

Following this, the two moulded parts and the two outer coating layers are placed in a press in order to coat the part, which is based, obviously, on one coating on the visible side of the upper part and another coating on the non-visible side of the lower part.

The pressing together takes place and the excess material from the moquette coating fibre is cut off in the press itself.

Given that the upper and lower shapes or geometries of the tray are different, the joining and consolidation of its two constituent parts creates intermediate hollows or gaps caused by the lack of correspondence between the two shapes. Obviously, both portions have areas that are stuck together, through which the final consolidation of the tray is carried out.

All these and other details of the invention will be understood with greater clarity with reference to the accompanying sheet of drawings, in which the following are represented, for guidance purposes only:
- Figure 1 is a plan view of a tray for automobiles, in accordance with the invention.
- Figure 2 is a vertical cross section of the tray, showing its upper and lower sides in diagram form.

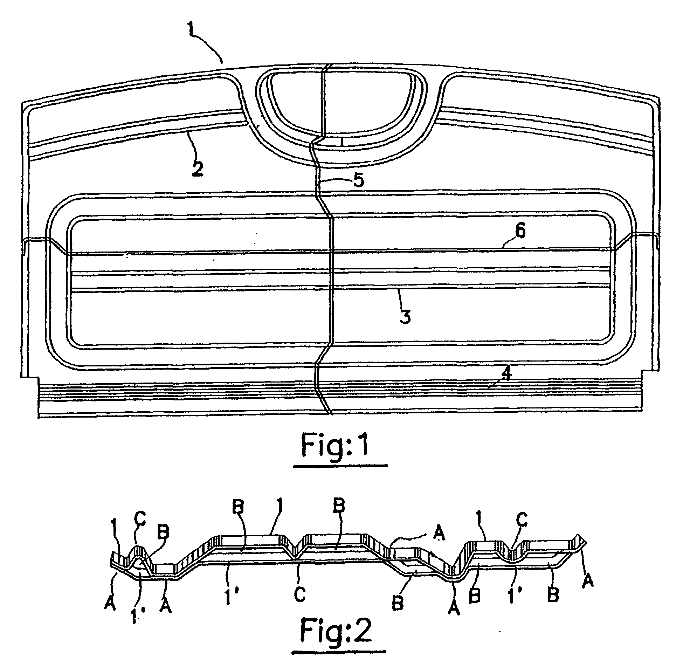

Looking now at Figure 1, we can observe a tray with its upper side (1) provided with several recesses and projections, as well as reinforcing ribs (2, 3, 4) that provide the appropriate shape. The positions (5, 6) represent the vertical and horizontal cross sections, respectively, of the tray.

On this upper side (1), as on the lower side, which is not shown here, the tray is produced based on a separately moulded mat with the specific shape of the upper part of the tray and also cut to the exact size.

Later, as mentioned previously, once that the two component parts of the tray have been produced, the moquette coatings are placed over the outer sides and all this is housed in a press which apart from carrying out and bonding the assembly, also cuts off any surplus moquette.

According to Figure 2, we can appreciate a cross section of the tray, showing the upper side (1) and the lower side (1'). It can be seen that there are portions (A) where the sides are joined together and other portions (C) by way of reinforcing ribs, as well as gaps that provide empty spaces or recesses that can be used for different purposes, as mentioned previously.

The different exterior geometry of the two bodies (1, 1') can be observed here, in order to procure two different external surfaces, once the two bodies have been cut during moulding to their exact size and the excess of moquette and adhesive material has been eliminated during the pressing process.

Obviously, the moquette that coves the exterior surfaces of both bodies (1, 1') has not been represented in this Figure 2.

Moreover, it must also be made clear that different materials can be used in the production process for the trays, such as, for example, the following:
a) Assemblies of textile fibres with resins epoxi, phenolic, polyester,...
b) Assemblies of wood fibres with resins.
c) Assemblies of natural fibres, for instance, linen, jute, ... and mixtures of these with resins.
d) Assemblies of synthetic polypropylene, polyester fibres and resins.
e) Assemblies of all the materials indicated in the sections above that can be moulded and that produce a rigid casing.
f) Any injected plastic or injected polyurethane material that can be joined together with two sides, providing empty spaces between them in such a way that greater rigidity of the final layer is obtained.

## Claims

1. Procedure for producing trays and similar items, based on porous mats of different materials impregnated with resins, moulded with the final shapes and thicknesses of the unit to be achieved and then covered with adhesive moquette on both outer sides and finally subjected to pressing for its final joining together by the activation of the adhesive, which is **characterized by** the following steps:
- moulding one of the said mats, obtaining rigidity by curing or setting, so that it provides an exterior side that it is adapted to one of the exterior sides (1) of the tray to be produced, while at the same time being cut to the exact size,
- moulding and cutting the other mat in the same way, so that it provides an exterior side that it is adapted to the other exterior side (1') of the tray to be produced,
- coating the exterior sides of the mats, with adhesive moquette,
- joining together the two rigid casings, with the moquette coating already fitted, by the sides without moquette, and applying adhesive in the common connection areas,
- subjecting the assembly to the action of a press, which is responsible for securing both together, by joining together the said assembly and at the same time removing the surplus outer moquette.

2. Procedure for producing trays and similar items, in accordance with claim 1, **characterized in that** the fibres of the two mats are textile fibres bonded together with epoxy, phenolic and polyester resins.

3. Procedure for producing trays and similar items, in accordance with claim 1, **characterized in that** the fibres of the two mats are wooden fibres bonded together with resins.

4. Procedure for producing trays and similar items, in accordance with claim 1, **characterized in that** the fibres of the two mats are natural and/or synthetic fibres bonded together with resins.

5. Procedure for producing trays and similar items, in accordance with claim 1, **characterized in that** the two mats are made of injected plastic material.

## Patentansprüche

1. Verfahren zur Herstellung von Schalen und ähnlichen Gegenständen auf der Grundlage poröser Matten aus verschiedenen harzimprägnierten Materialien. Diese werden mit der endgültigen Form und Stärke der zu Ende führenden Einheit geformt, dann auf beiden Außenseiten mit einer klebbaren Mokette überzogen und schließlich zur abschließenden Verbindung zusammen mit der Aktivierung des Klebers einer Pressung unterzogen. Das Verfahren kennzeichnet sich durch folgende Schritte:
- Formen einer der erwähnten Matten und dabei Erzielung einer Steifigkeit durch Aushärtung oder Verfestigung, so dass eine Außenseite gewonnen wird, die auf eine der Außenseiten (1) der herzustellenden Schale angepasst ist, während sie gleichzeitig auf die genaue Größe zugeschnitten wird,
- Formen und Schneiden der anderen Matte in der gleichen Weise, so dass eine Außenseite gewonnen wird, die auf die andere Außenseite (1') der herzustellenden Schale angepasst ist,
- Überziehen der Außenseiten der Matten mit klebbaren Moketten,
- Zusammenfügung der beiden steifen Körper mit der bereits aufgebrachten Überzugsmokette an den mokettenlosen Seiten unter Aufbringung von Kleber auf die gemeinsamen Verbindungsbereiche,
- Das Ganze wird der Tätigkeit einer Presse unterzogen, die für den sicheren Zusammenhalt des besagten Ganzen verantwortlich ist, wobei gleichzeitig die überstehende äußere Mokette entfernt wird.

2. Verfahren zur Herstellung von Schalen und ähnlichen Gegenständen im Einklang mit Patentanspruch 1, das sich **dadurch kennzeichnet, dass** die Fasern der beiden Matten aus mit Epoxi-, Phenol- und Polyesterharzen verklebten Textilfasern bestehen.

3. Verfahren zur Herstellung von Schalen und ähnlichen Gegenständen im Einklang mit Patentanspruch 1, das sich **dadurch kennzeichnet, dass** die Fasern der beiden Matten aus mit Harzen verklebten Holzfasern bestehen.

4. Verfahren zur Herstellung von Schalen und ähnlichen Gegenständen im Einklang mit Patentanspruch 1, das sich **dadurch kennzeichnet, dass** die Fasern der beiden Matten aus mit Harzen verklebten Natur- und/oder Kunstfasern bestehen.

5. Verfahren zur Herstellung von Schalen und ähnlichen Gegenständen im Einklang mit Patentanspruch 1, das sich **dadurch kennzeichnet, dass** die beiden Matten aus eingespritztem Kunststoffmaterial bestehen.

## Revendications

1. Procédé pour la production de plateaux et autres produits similaires, basé sur des tapis poreux faits de matériaux divers imprégnés de résines, moulés avec les formes finales et les épaisseurs du produit à fabriquer, puis recouverts de moquette adhésive des deux côtés et enfin soumis à une pression pour la jointure finale grâce à l'action de l'adhésif, **caractérisé par** les étapes suivantes :
- moulage de l'un de ces tapis, qui permet d'obtenir de la rigidité par séchage et formage ; une face extérieure est donc adaptée à l'une des faces extérieures (1) du plateau à produire, avec découpage à la taille exacte.
- moulage et découpe de l'autre tapis de la même manière, de telle sorte qu'une face extérieure est adaptée à l'autre face extérieure (1') du plateau à produire.
- couverture des faces extérieures des tapis avec de la moquette adhésive.
- collage des deux carcasses rigides toujours recouvertes de moquette par les faces sans moquette, et en appliquant de l'adhésif sur les points de jonction.
- l'ensemble est alors mis sous une presse qui permet de fixer le tout solidement, puis on procède à la découpe de la moquette extérieure dépassant de l'ensemble.

2. Procédé pour la production de plateaux et autres produits similaires, conformément à la revendication 1, **caractérisé par le fait que** les fibres des deux tapis sont des fibres textiles collées par des résines époxy, phénoliques et polyester.

3. Procédé pour la production de plateaux et autres produits similaires, conformément à la revendication 1, **caractérisé par le fait que** les deux tapis sont en fibres de bois collées par des résines.

4. Procédé pour la production de plateaux et autres produits similaires, conformément à la revendication 1, **caractérisé par le fait que** les fibres des deux tapis sont des fibres naturelles et/ou synthétiques collées par des résines.

5. Procédé pour la production de plateaux et autres produits similaires, conformément à la revendication 1, **caractérisé par le fait que** les deux tapis sont en matériaux de plastique injecté.
